# EUROPEAN PATENT SPECIFICATION

(11) **EP 3 032 989 B1**
(45) Date of publication and mention of the grant of the patent: **30.08.2023**
(21) Application number: 14750490.6
(22) Date of filing: 13.08.2014
(51) Int. Cl.: A47J 31/06, A47J 31/36

(54) **CAPSULE MULTI-PIERCING**
KAPSEL-MEHRFACHDURCHSTICH
MULTI-PERFORATIONS DE CAPSULES

(30) Priority: 13.08.2013 EP 13180164
(43) Date of publication of application: 22.06.2016
(73) Proprietor: Société des Produits Nestlé S.A., 1800 Vevey (CH)
(72) Inventor: FLICK, Jean-Marc, 1405 Pomy (CH); COLANTONIO, Jean-Luc, 1686 Grangettes Pres Romont (CH)
(74) Representative: Schnyder, Frank Simon
(86) International application number: PCT/EP2014/067286
(87) International publication number: WO 2015/022344

(56) References cited:
- EP-A1- 1 500 357
- EP-A1- 1 529 469
- WO-A1-2009/153815
- WO-A1-2012/077066

## Description

### Field of the invention

The present invention relates to the interaction of a capsule and a device for piercing the capsule in a capsule extraction unit, in particular to a combination of such a device and a capsule, to the method of piercing the capsule and to the use of a capsule for such piercing.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient.

### Technical background

Certain beverage preparation machines use capsules containing ingredients to be extracted or to be dissolved and/or ingredients that are stored and dosed automatically in the machine or else are added at the time of preparation of the drink. Some beverage machines possess filling means that include a pump for liquid, usually water, which pumps the liquid from a source of water that is cold or indeed heated through heating means, e.g. a thermoblock or the like. Especially in the field of coffee preparation, machines have been widely developed in which a capsule containing beverage ingredients is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup or glass.

Brewing devices have been developed to facilitate insertion of a "fresh" capsule and removal of the capsule upon use.

WO 2005/004683 and WO 2007/135136 relate to such brewing devices. The devices comprise a frame, a fixed holding part for the capsule, a movable holding part which is mounted relative to the frame in a sliding relationship, one or two knuckle joint mechanisms that provide a mechanical system which enables to close in a steady and fluid-tight manner the holding parts about the capsule while also resisting to the counter-force acting while re-opening and generated by the internal brewing pressure, and a handle for directly levering the knuckle joint mechanism. Such a device forms a simple assembly enabling insertion of the capsule by vertical fall through a passage in the frame and removal of the used capsule in the same direction as the insertion direction. The handle may serve to cover and uncover the passage for the capsule. The movable parts of the brewing device are actuated manually via the handle. The manual force required to move the movable parts varies during closure and opening of the machine and depends on the dimensional tolerances of the capsules used and the positioning and nature of the capsules as well as the temperature of the brewing unit. WO 2009/043630 discloses a beverage preparation machine including a brewing unit having a front part with a passage for inserting a capsule into the brewing unit. The front part is arranged to telescope out of the machine's housing for uncovering the passage for inserting a capsule into the brewing unit and telescopes into the brewing unit for sliding the passage under the housing and thus covering the passage by the housing. From a different approach, the actuation of the movable part of the brewing device may be motorized. EP 1 767 129 relates to a motor-driven extraction module for a capsule-based beverage production device. In this case, the user does not have to provide any manual effort to open or close the brewing device. WO 2012/025258 and WO 2012/025259 disclose other motorized machine for preparing beverages from ingredient capsules.

When the capsule containing the material to be extracted, e.g. a beverage ingredient, is partly or entirely sealed, in particular water and optionally air tight, it may be necessary to open the sealed capsule part by means of an appropriate opener. The opening may be delayed, i.e. during the extraction process of the capsule in the extraction unit e.g. as disclosed in EP 0 512 470 or in EP 2 068 684, or it may be carried out in the unit before extraction of the cartridge e.g. as disclosed in WO 02/00073 or in WO 02/35977. Further opening arrangements are disclosed in US 3,260,190, US 5,649,472, CH 605 293, EP 512 468 and EP 242 556.

An extraction unit may typically include one or more blades for forming an opening in a capsule before extraction of the capsule. When a blade is used which does not itself include a liquid circulation duct, i.e. a duct for guiding liquid into or out from the capsule, the liquid normally circulates, outside and along the blade, into or out from the capsule in a passage formed inbetween the blade the boundaries of the opening formed in the capsule by the blade in the capsule. The passage formed between the blade and these boundaries may be too small for allowing the desired flow of liquid into or out of the capsule. As a result, the flow along the capsule may be too small, or the capsule may be torn in an unwanted manner about the boundaries (in the case of a pressurized outflow of liquid from the capsule) or the capsule may be crushed (in the case of a pressurized inflow or attempted inflow of liquid into the capsule).

This problem has been addressed in WO02/00073. An extraction unit is disclosed which includes several capsule piercing blades that pierce a capsule for allowing a circulating of liquid through the capsule. The blades have transverse though-openings that extend into a cartridge during extraction to provide an increased space along the blade so as to facilitate introduction of liquid from outside into the cartridge.

The presence of such a large through-opening across the blade improves significantly the flow of liquid into or out of the capsule by extending the section of the through-passage of liquid inwards in the blade about the boundaries of the opened capsule at the level of the blade. Such a large through-opening however also weakens the mechanical strength of the blade. This may become an issues over time, especially when harder capsules are used that are not easily pierced by the blade. Such an added constraint on the blade during piercing may of course lead to an early failure of a blade with a through-opening.

Another approach to improve the flow of liquid into is disclosed in EP 2012192347.8 where rams are used to enlarge openings formed by cutting or piercing elements in the capsule.

One problem encountered with prior art piercing, in particular piercing of capsule prior to any pressure rise within the capsule, resides in an insufficient circulation of fluid into the capsule. As mentioned above, solutions have been provided to this problem, for instance as disclosed in WO02/00073 and in EP 2012192347.8. Such systems improve the incoming flow in a capsule. WO 2012/077066 A1 discloses an extraction unit and a capsule.

However, there is still a need to improve the flow distribution in a capsule. It has been proposed to increase the number of piercing elements and corresponding openings that are formed in the capsule. However, the greater the number of piercing elements, the greater the pressure needed to form all the openings with the piercing device and the greater the risk of crushing the capsule instead of piercing it. This risk is even increased with the increasing trend of reducing packaging materials for economic and environmental reasons, which leads to a structural weakening of the capsules. Therefore, it has been proposed to provide an internal capsule distribution channelling connected to a capsule inlet and spreading inside the capsule the fluid fed into the inlet. However, the latter solution involves additional internal capsule components, which add to the capsule manufacturing costs.

There is still a need to improve the fluid circulation in a capsule via openings formed in the capsule, in particular the fluid distribution at the capsule openings.

### Summary of the invention

The invention relates to the cooperation between a capsule and a capsule extraction unit. This cooperation may relate to the preparation of a beverage from the capsule that contains a beverage ingredient to be extracted, such as coffee, tea, chocolate, cacao, milk or soup. Hence, the extraction unit may typically be incorporated in a beverage machine.

Such beverage preparation typically includes the mixing of a plurality of beverage ingredients, e.g. water and milk powder, and/or the infusion of a beverage ingredient, such as an infusion of ground coffee or tea with water. For instance, a predetermined amount of beverage is formed and dispensed on user-request, which corresponds to a serving. The volume of such a serving may be in the range of 25 to 200 ml or up to 300 or 400 ml, e.g. the volume for filling a cup or mug, depending on the type of beverage. Formed and dispensed beverages may be selected from ristrettos, espressos, lungos, cappuccinos, café latte, americano coffees, teas, etc... In particular, a coffee machine may be configured for dispensing espressos, e.g. an adjustable volume of 20 to 60 ml per serving, and/or for dispensing lungos, e.g. a volume in the range of 70 to 150 ml per serving.

One aspect of the invention relates to a combination of an extraction unit and a capsule to be extracted by the according to independent claim 1.

The piercing device, or at least its piercing elements, may be made of metal, such as steel or iron, or of ceramic or possibly hard polymeric material. The capsule wall to be opened by the piercing elements should be made of a material that does not excessively wear the piercing extremities, such as plastic or aluminium. The capsule may also be made of biodegradable material.

Hence, the piercing device can be fitted with a large number of piercing elements forming a corresponding number of inlet or outlet openings with a reduced risk of crushing the capsule when the openings are formed at different moments in time.

For instance, the capsule has a face to be pierced by all the piercing extremities of the piercing device. The capsule face may be so deformable as to deform without piercing over at least 5% of an overall size of the capsule in the piercing direction, in particular deform without piercing over at least 10% or 15% thereof, if the capsule face were in contact with and urged against all piercing extremities of the piercing device to be pierced at the same moment in time. The capsule face can be made of at least one of a metal such as aluminium, plastic, and biodegradable material.

The piercing extremities can be generally located on different virtual piercing planes perpendicular to the piercing direction. For instance, each piercing plane may have a total number of piercing extremities in the range of 1 to 8, in particular 2, 3, 4, 5, 6 or 7.

The piercing extremities may be generally located on a single virtual piercing plane, optionally the single piercing plane having a total number of piercing extremities of 2, 3, 4, 5, 6, 7, 8, 9 or 10.

The piercing extremities of at least one plane can be arranged generally in a circle or oval or similar arrangement and optionally evenly spaced apart.

In general, the piercing extremities should be in a relative arrangement that does not generally match the shape of the portion of the capsule to be pierced. The piercing extremities may however be in a relative arrangement that does generally match the capsule portion to be pierced providing the arrangement is off-set relative to the capsule portion when it pierces it, for instance it may be at an angle to the capsule portion, so that not all piercing extremities are urged against the capsule portion simultaneously.

In one embodiment, of the invention, the piercing device comprises at least one of:
- a base supporting the piercing elements; and
- at least one blade and/or at least one pin as a piercing element.

The base can have one or more assembly arrangements, e.g. at least one assembly arrangement selected from an assembly hole, a notch and a protruding member such as a screw or rivet or a spring member e.g. a clip, for anchoring and/or positioning the base in a capsule receiver. Optionally, the assembly member(s) and the blade are at an angle and the capsule receiver has a rib extending between the assembly member(s) and the blade into this angle, typically forming a notch in the piercing device. The blade and the base and when present the assembly member(s) may be formed of a single bent plate. For instance, the blade and, when present, the assembly member is/are bent at an angle in the range of 75 to 105 deg, such as 85 to 95 deg, relative to the base.

For instance, the piercing device has a first type of blades that comprises at least one assembly member for securing the device in such unit. For example, the assembly member(s) extends from a bottom part of the first-type blade (s) and/or forms a cut-out in the first-type blade(s) such as a foot thereof and/or is movable relative to the piercing extremity of the first-type blade(s) such as resiliently movable.

Thus, instead of alternating piercing elements and assembly members around a peripheral part of a base of a piercing device, piercing elements and assembly members may be combined on a same peripheral edge of the base so that the location at which the assembly members extends from the base can also serve as a location from which a piercing element extends.

Hence, the number of piercing elements may be increased in a given volume even when the piercing device requires protruding assembly member(s) and/or is made of a single bent plate. This is particularly advantageous for retrofitting piercing devices having an increased number of piercing elements in existing designs of extraction units, in particular without narrowing or compromising on the shape of the piercing parts of the piercing elements.

The piercing device can have a second type of blades devoid of such assembly member associated with the first type of blades. For instance, the second-type blade(s) has/have a foot with a second width generally equal to a first width of a foot of the first-type blade(s), and/or the first and second type blades are disposed in alternation about an axis of the piercing device, the axis being for example a central axis of the piercing device and/or an axis parallel to the piercing direction.

Typically, the piercing device is formed of a single bent plate cut so as to form the base and the piercing elements, e.g. the blade(s) and/or pin(s).

The plate forming the cutting edge and optionally the assembly member(s) may have a constant thickness along the piercing elements.

The entire piercing device or parts thereof (e.g. such a base) may be made of a thin plate, e.g. a sheet, of constant thickness, e.g. of less than 1 mm, typically a thickness in the range of 0.05 to 0.5 mm.

The portion of the plate forming the piercing element may have a thickness that is tapered along the piercing element to form a sharper cutting ramp.

At least one piercing element can have:
- an edge that is generally parallel to the piercing direction and an inclined edge intercepting the parallel edge to form the piercing extremity; or
- two edges inclined to the piercing direction and intercepting each other to form the piercing extremity.

The cutting edges of a piercing element may generally form a v- or u-arrangement.

An edge can be in the shape of a straight and/or curved cutting ramp.

The piercing extremities of a piercing plane may be arranged generally in one or more circles or ellipses and optionally evenly spaced apart.

Each piercing extremity can have a piercing axis generally parallel to the piercing direction. In one embodiment, the piercing elements and the piercing extremities of the piercing device can be in a generally single cylindrical arrangement about a generally central axis of the piercing device. In another embodiment, the piercing elements and the piercing extremities of the piercing device may be in a generally multiple cylindrical arrangement such as a dual cylindrical arrangement, in particular a concentric cylindrical arrangement. In such embodiments, the piercing extremities of a cylindrical arrangement can be evenly spaced apart.

The extraction unit may comprise a first capsule receiver: which is integral with the piercing device; or in or on which the piercing device is mounted. For instance, the first capsule receiver is connected to a fluid line for circulating a fluid into a capsule pierced by the piercing device. Typically, the receiver has a cavity adapted to receive the capsule, for example a cavity that has a shape cooperating with the capsule.

The extraction unit may include a second capsule receiver that is movable relatively to the first capsule receiver, between an open position for inserting or removing a capsule from such extraction unit and a closed position for extracting the capsule in such unit. The second capsule receiver can be arranged to hold the capsule against the piercing extremities when the first and second receivers are relatively moved into the closed position generally parallel to the piercing direction.

The invention also relates to a method of piercing, in an above described combination, the capsule. The method comprises urging the capsule against the piercing device along the piercing direction so that two different piercing extremities of the device contact and penetrate the capsule at different respective moments in time.

According to another aspect, the invention relates to a use of a capsule for:
- providing a combination as described above; or
- being pierced by a method as described above,
so that two different piercing extremities of the piercing device contact and penetrate the capsule at different respective moments.

The capsule comprises a generally cylindrical or frusto-conical or domical or frusto-domical container that has a bottom and a cover. For instance, the container has an axis of symmetry such as an axis of revolution. The capsule may have a face to be pierced by all the piercing extremities of the piercing device, the piercing face being formed by the bottom or the cover of the capsule. The container axis may be generally parallel to piercing direction when the capsule is pierced by the piercing device in the extraction unit.

A further aspect of the invention relates to a use, for a capsule for a use, of at least one of coffee, tea, chocolate, milk and soup constituents as an ingredient contained in said capsule.

### Brief description of the drawings

The invention will now be described with reference to the schematic drawings, wherein:
- Figure 1 is a perspective view of a piercing device of a combination according to the invention;
- Figure 2 is a side view of the piercing device illustrated in Fig. 1;
- Figures 3a to 3d illustrate a piercing sequence of a capsule in a combination according to the invention, capsule receivers of the unit of the combination being illustrated in Figs 3a and 3d; and
- Figures 4 and 5 schematically illustrate two further embodiments of combinations according to the invention.

### Detailed description of the invention

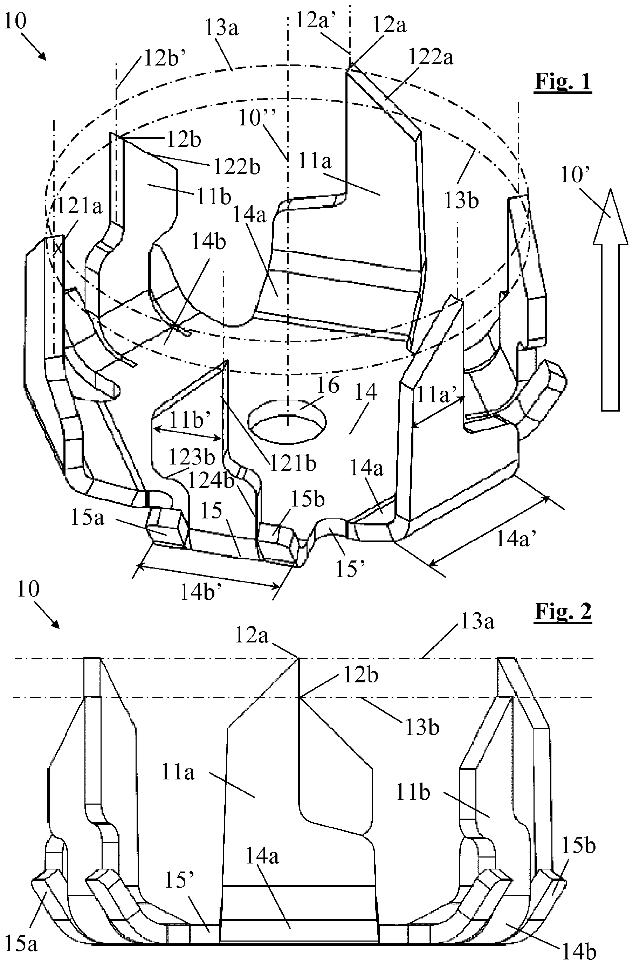

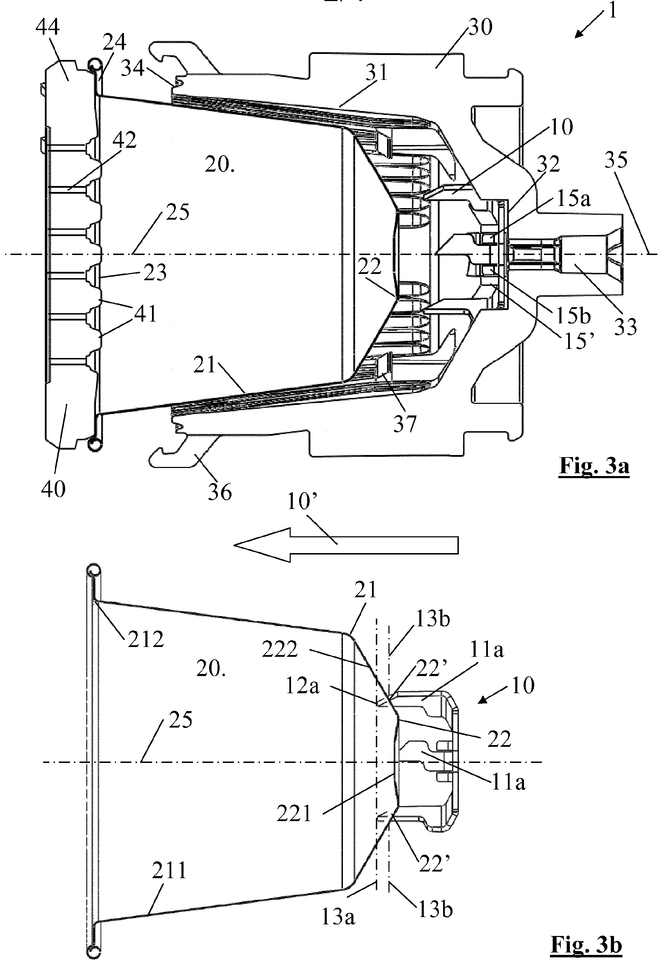

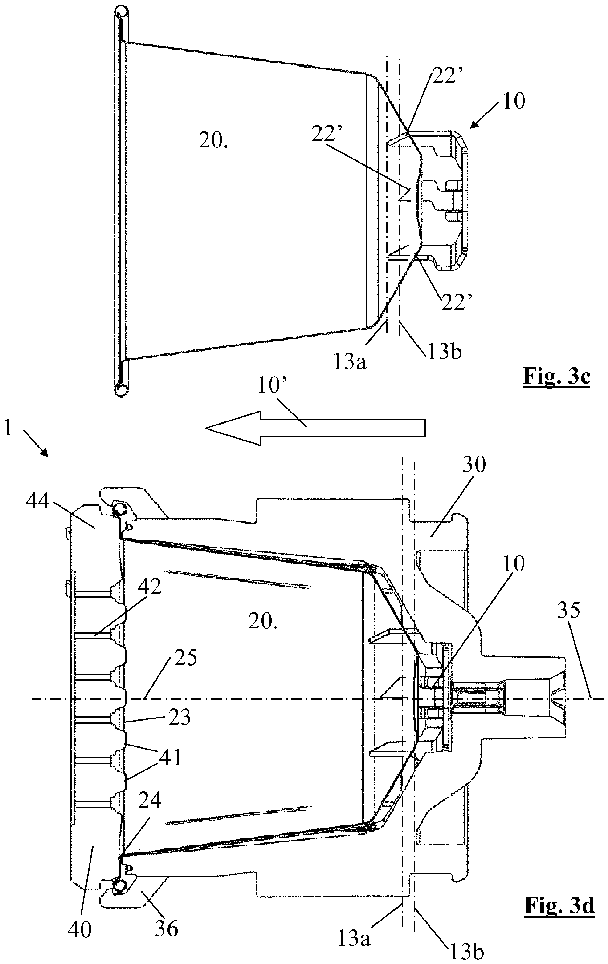

An example of an extraction unit 1 and its cooperation with a capsule 20 according to the invention is generally illustrated in Figs 1 to 3d. An extraction unit 1 having capsule receivers 30,40 and a piercing device 10 with a cooperating capsule 20 are shown in Figs 3a and 3d. Piercing device 10 is illustrated in details in Figs 1 and 2. A piercing sequence of a capsule 20 is shown in Figs 3a to 3d.

Capsule 20 has a container 21 with a bottom 22, for instance a bottom forming an injection or extraction face, and a cover 23, for instance a face forming an extraction face or injection face of capsule 20. Cover 23 extends laterally to form with a rim of container 21 a flange 24. Cover 23 can be appropriately joined to the rim of container 21 to form flange 24.

The capsule 20 comprises a generally cylindrical or frusto-conical or domical or frusto-domical container 21 that has bottom 22 and cover 23. The entire or only part of the cover may be applied to the container; or the entire cover may be formed integrally with the container.

For instance, container 21 has an axis 25 of symmetry such as an axis 25 of revolution. Capsule 20 has a face 22 to be pierced by all piercing extremities 12a,12b of piercing device 10, piercing face 22 being formed by the bottom or the cover of the capsule.

As shown in Fig. 3b, container 21 can have a frusto-conical obtuse bottom 22 and a fruto-conical acute body 211 extending from bottom 22 towards container mouth 212. Bottom 22 may have a generally flat or slightly convex or concave end 221 and a peripheral wall 222.

Container 21 may be made of plastic, biodegradable or aluminium material. Cover 23 can be made of paper, plastic, biodegradable or aluminium material.

Capsule 20 typically contains an ingredient, e.g. a beverage ingredient such as coffee, tea, cocoa, milk, etc... For instance, capsule 20 has a volume for containing 3 to 10 g ground coffee for the preparation of a ristretto, an espresso, a lungo or an americano coffee.

Suitable capsules are for example disclosed in EP 0 512 468, EP 0 512 470 and EP 2 068 684.

Capsule 20 may be extracted by circulating a liquid therethrough to mix it with an ingredient contained in capsule 20, e.g. a flavouring ingredient.

Piercing device 10 has a plurality of piercing elements 11a,11b, each element 11a,11b having a piercing extremity 12a,12b arranged to pierce capsule 20 in a piercing direction 10', such as a direction 10' generally parallel to a longitudinal axis 12a'12b' of piercing elements 11a,11b. Piercing extremities 12a,12b are arranged to form at corresponding locations 22' in capsule 20 either a series of corresponding inlet openings 22' (Figs 3b and 3c) or a series of corresponding outlet openings (not shown).

The piercing device 10 includes a plurality of piercing elements 11a,11b each element having a piercing extremity 12a,12b arranged to pierce capsule 20 in a piercing direction 10', such as a direction 10' generally parallel to an axis 12a',12b' of piercing elements 11a,11b. Piercing extremities 12a,12b forming at corresponding locations 22' in capsule 20 either a series of corresponding inlet openings 22' or a series of corresponding outlet openings (not shown).

Piercing extremities 12a,12b of elements 11a,11b may in particular be arranged to pierce capsule 20 prior to circulating an extraction fluid into capsule 20.

In the absence of a sufficient resistance of the capsule, for instance in the absence of a sufficient internal pressure in the capsule or structural strength of the capsule, capsule 20 is particularly exposed to crushing by a piercing device.

Piercing extremities 12a,12b are spatially arranged relatively to piercing locations 22' to contact and penetrate capsule 20 at piercing locations 22' at different respective moments in time when capsule 20 and piercing device 10 are urged together in piercing direction 10' in extraction unit 1 (Figs 3a to 3d).

By providing such an arrangement, piercing device 10 can be fitted with a large number of piercing elements forming a corresponding number of inlet or outlet openings for distributing the flow of liquid at the openings with a reduced risk of crushing the capsule when the openings are formed at different moments in time.

For example, piercing extremities 12a,12b may be generally located on different virtual piercing planes 13a,13b perpendicular to piercing direction 10' (Figs 1 and 2).

Piercing locations 22' can be located on a capsule portion 22 that is non-parallel to piercing planes 13a,13b, in particular the capsule portion is a non-planar face 22, such as a generally conical, domical, polyhedral or mixed face 221,222.

The capsule has a face 22 to be pierced by all piercing extremities 12a,12b of piercing device 10, capsule face 22 being optionally so deformable as to deform without piercing over at least 5% of an overall size of the capsule in piercing direction 10', in particular deform without piercing over at least 10% or 15% thereof, if capsule face 22 were in contact with and urged against all the piercing extremities of the piercing device to be pierced at the same moment in time, capsule face 22 being for instance made of at least one of metal such as aluminium, plastic, and biodegradable material.

Each piercing plane 13a,13b may have a total number of piercing extremities 12a,12b of 1, 2, 3, 4, 5, 6, 7 or 8. In the particular example illustrated in the appended figures, each piercing plane 13a,13b has three piercing extremities 12a,12b.

Piercing device 10 may comprise at least one of: a base 14 supporting piercing elements 11a,11b; and at least one blade 11a,11b and/or at least one pin as a piercing element.

Piercing device 10 shown in the appended figures is made of a single bent plate that is cut to form base 14 and piercing elements 11a,11b. As illustrated in Figs 1 to 3d, assembly arrangements 15a,15b,15',16 may also be formed in the bent plate to assemble piercing device 10 in such unit 1, in particular to a capsule receiver 30 of unit 1. Piercing device 10 may be made of a bent metal plate.

For instance, piercing elements 11a,11b and, when present, assembly member(s) 15a,15b are bent at an angle in the range of 75 to 105 deg, such as 85 to 95 deg, relative to base 14.

Piercing device 10 can have a first type of blades 11b that comprises at least one assembly member 15a,15b for securing device 10 in such unit 1. Optionally, assembly member(s) 15a,15b extend from a bottom part 14b of first-type blade(s) 11b.

Assembly member(s) 15a,15b may form a cut-out 15a,15b in first-type blade(s) 11b, such as in a foot 14b thereof. For instance, cut-out forming assembly member 15a may be associated with a generally L-shaped bottom part 123b of first-type blade(s) 11b and a generally straight bottom part 124b of blade(s) 11b.

Assembly member(s) 15a,15b can be movable relative to the piercing extremity 12b of the first-type blade(s) such as resiliently movable, in particular when formed of the same bent plate as piercing extremity 12b.

Hence, instead of alternating piercing elements and assembly members around a peripheral part of a base of a piercing device, piercing elements 11b and assembly members 15a,15b may be combined on the same peripheral edge 15 of base 14 so that the location at which the assembly members 11b extend from base 14 can also serve as a location from which piercing element(s) 11a,11b extend(s) .

Piercing device 10 can have a second type of blades 11a devoid of such assembly member. Optionally, the second-type blade (s) 11a have a foot 14a with a second width 14a' generally equal to a first width 14b' of a foot 14b of the first-type blade(s) 11b. First and second type blades 11a,11b may be positioned in alternation about an axis, such as a central axis 10" and/or an axis 10" parallel to piercing direction 10', of piercing device 10.

At least one piercing element 11a,11b can have an edge 121a,121b that is generally parallel to piercing direction 10' and an inclined edge 122a,122b intercepting the parallel edge to form piercing extremity 12a,12b.

By providing cut-outs for forming the assembly members 15a,15b along lines 123b and 124b of blade 11b, the piercing width 11b' formed by cutting edges 121b,122b of first-type blade (s) 11b can be maintained the same as the piercing width 11a' formed by cutting edges 121a,122a of second-type blade(s) 11a. This is shown in Fig. 1.

Piercing extremities 12a,12b of at least one perpendicular plane 13a,13b can be generally circularly arranged and optionally evenly spaced apart (Fig. 1).

Each piercing extremity 12a,12b may have a piercing axis 12a',12b' parallel to piercing direction 10'. In such a case, piercing elements 11a,11b of piercing device 1 being in a generally cylindrical arrangement about a generally central axis 10" of piercing device 10 and being optionally evenly spaced apart.

Extraction unit 1 may include a first capsule receiver 30: which is integral with the piercing device (not shown); or in or on which piercing device 10 is mounted (Figs 3a and 3d).

For instance, piercing device 10 is mounted at a bottom 32 of receiver 30.

In particular bottom 32 comprises recesses into which assembly members 15a,15b are urged and comprises a series of protrusions cooperating with recesses 15' of piercing device 10 for positioning and securing device 10 at bottom 32 of receiver 30.

Passage 16 in piercing device 10 may be used to secure device 10 in receiver 30 and/or to allow a flow of liquid into or out of capsule 20 through piercer 10, in particular between capsule 20 and fluid line 33 of receiver 30. For example passage 16 is associated with a hollow screw or rivet member that fixes piercing device 10 in receiver 30, in particular at bottom 32, and allows the circulation of a fluid between capsule 20 and line 33.

First capsule receiver 30 can be connected to a fluid line 33 for circulating a fluid into or from capsule 20 pierced by piercing device 10.

Extraction unit 1 may include a second capsule receiver 40 that is movable relatively to first capsule receiver 30, between an open position for inserting or removing a capsule 20 from such unit 1 (not shown) and a closed position for extracting capsule 20 in such unit 1 (Fig. 3d).

The relative movement of first and second receivers 30,40 between the open and the closed positions, in particular from the open position to the closed position and vice versa, may be generally parallel to at least one of: piercing direction 10', piercing device axis 10" and piercing element axis 12a',12b'. When piercing direction 10' is parallel to the direction of the relative movement of first and second receivers 30,40 the closure of the receivers 30,40 may be used to pierce capsule 20 by piercing device 10.

Second receiver 40 may be arranged to hold capsule 20 against piercing extremities 12a,12b when first and second receivers 30,40 are relatively moved into the closed position generally parallel to piercing direction 10', for instance as disclosed in WO 2005/004683 and EP 1859714.

In the exemplary embodiment illustrated in Figs 3a and 3d, first capsule receiver 30 has a cavity 31 for housing capsule 20, in particular capsule container 21 and second capsule receiver 40 forms a lid 44, in particular an outflow lid, for closing cavity 21. In particular, first receiver 30 has a mouth 34 through which capsule 20 can enter into cavity 21. In the closed position, capsule flange 24 may be squeezed between a peripheral part of lid 44 and mouth 34 (Fig. 3d) whereby cavity 31 can be sealed around capsule container 21 to avoid that liquid supplied via line 33 into cavity 31 bypasses capsule 20. Lid 44 includes a series of passages 42 for circulating liquid into or out of capsule 20 and a series of piercing or tearing protrusions 41 for opening capsule cover 23. As illustrated in the Figures, cavity 31 may have a central axis 35 that is generally identical with a central or symmetry axis 25 of capsule 20 when extraction unit 1 is in the extraction position.

First receiver 30 is fitted with retainers 36,37 for unsticking capsule 20 from second receiver 40, in particular for unsticking capsule cover 23 from flow collector 44, when first and second receivers 30,40 are relatively moved apart upon extraction. For instance, first retainer 36 retains capsule flange 24 and second retainer 37 retains capsule container 21. A third retainer (not shown) may be provided to remove capsule 30 from first and second retainers 36,37, e.g. a retainer that engages with capsule flange 24 when cover 23 is unstuck and that relatively moves capsule flange 24 away from mouth 34. Such a third retainer may be formed or associated with a guide channel that guides flange generally perpendicularly to axis 35 at introduction of capsule 20 into extraction unit 1 and/or at removal of capsule 20 from unit 1.

First and second capsule receivers 30,40 may be relatively moved by a manual action, e.g. as disclosed in WO 2005/004683, WO 2007/135135, WO2007/135136 or WO 2009/043630, or by an automatic action in particular a motorized action, e.g. as disclosed in EP 1767129, WO 2012/025258, WO 2012/025259, or a hydraulic or mixed action e.g. as in WO 2011/042400. These references also disclose suitable capsule handlings: to guide capsule 20 to an intermediate position between the spaced-apart receivers 30,40; move receivers 30,40 together into the extraction position with a capsule 20; and eject capsule 20 upon extraction when receivers 30,40 are spaced apart. In particular, piercing device 10 can be retrofitted into the extraction units disclosed in these references to form an extraction unit 1 according to the invention.

Extraction unit 1 may be mounted in a beverage preparation machine as known in the art, e.g. a machine provided with the functionalities disclosed in WO 2009/074550, such as a control unit, a user-interface, a fluid line, a pump, a temperature conditioner in particular a heater and/or a cooler, a water tank or other ingredient feeder, a waste ingredient collector, etc...

During operation, capsule 20 and piercing device 10 are positioned to face each other, then capsule 20 and piercing device are urged against each other along piercing direction 10' so that two different piercing extremities 12a,12b of device 10 contact and penetrate capsule 20 at different respective moments. Figs 3a to 3d illustrate in greater details this process in which capsule 20 is located inbetween capsule receivers 30,40 with piercing device 10: in Fig. 3a capsule 20 is held in front of piercing device 10 at a distance thereof; in Fig. 3b, piercing device 10 and capsule 20 are urged against each other so that piercing extremities 12a of plane 13b pierce and enter capsule 20 whereas piercing extremites 12b of plane 13b are still located outside capsule 20; the entry into capsule 20 of piercing extremities 12b of plane 13b is shown in Fig. 3c; full entry of extraction device 10 is shown in Fig. 3d in which extraction unit 1 is in the extraction position.

Capsule 20 can be used in extraction unit 1 for forming a beverage of any type, in particular coffee, tea, chocolate, milk and soup.

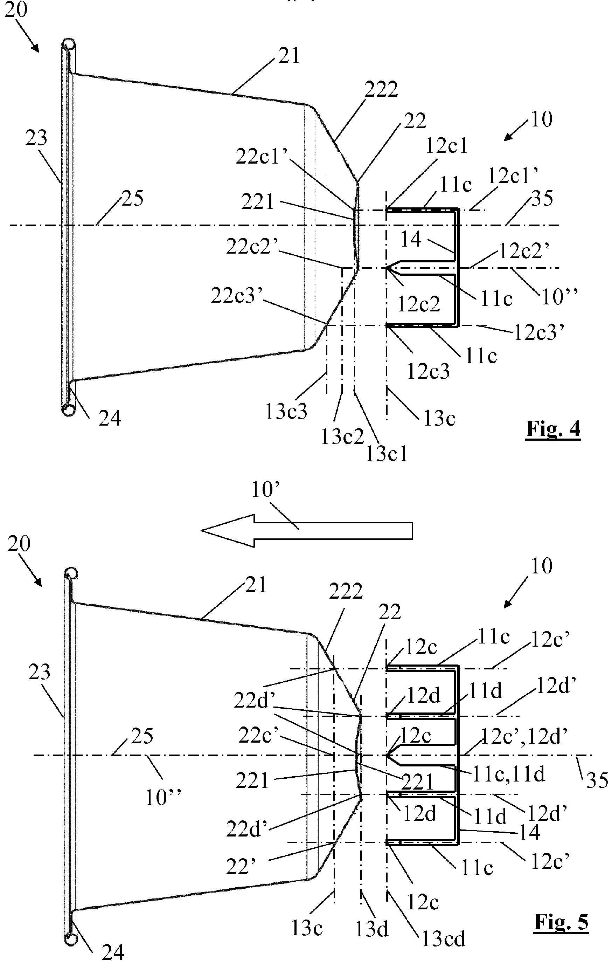

Fig. 4, in which the same numeric references generally designate the same elements, illustrates another example in accordance with the invention.

In this example, piercing device 10 comprises a plurality of piercing elements 11c each element having a piercing extremity 12c1,12c2,12c3 arranged to pierce capsule 20 in a piercing direction 10', such as a direction 10' generally parallel to a longitudinal axis 12c1' , 12c2' , 12c2' of piercing elements 11c, so that piercing extremities 12c1,12c2,12c3 forming at corresponding locations 22c1', 22c2' ,22c3' of capsule 20 either a series of corresponding inlet openings 22c1',22c2',22c3' or (not shown) a series of corresponding outlet openings. Piercing extremities 12c1,12c2,12c3 of elements 11c are in particular arranged to pierce capsule 20 prior to circulating an extraction fluid into capsule 20. Piercing extremities 12c1,12c2,12c3 are spatially arranged relatively to locations 22c1' ,22c2' ,22c3' to contact and penetrate capsule 20 at piercing locations 22c1' ,22c2' ,22c3' at different respective moments in time when capsule 20 and piercing device 10 are urged together in piercing direction 10' in the extraction unit.

Piercing extremities 12c1,12c2,12c3 are all generally located on a single virtual piercing plane 13c. Single piercing plane 13c may have a total number of piercing extremities of 2, 3, 4, 5, 6, 7, 8, 9 or 10. In the particular example illustrated in Fig. 4, piercing device 10 includes four piercing extremities, three 12c1, 12c2, 12c3 of which are shown while one is hidden behind extremity 12c2.

In fact, the four piercing extremities 12c1,12cs,12c3 are generally arranged in a circle and are equally spaced apart at 0, 90, 180 and 270 deg.

Moreover, each piercing extremity 12c1,12c2,12c3 has a piercing axis 12c1',12c2',12c3' generally parallel to piercing direction 10'. Piercing elements 11c and piercing extremities 12c1, 12c2, 12c3 can be in a generally single cylindrical arrangement about a generally central axis 10" of piercing device 10.

Further illustrated in Fig. 4, piercing locations 22c1', 22c2' ,22c3' on capsule 20 are located on a capsule portion 22 that is non-parallel to piercing plane(s) 13c, in particular a non-planar face 22. Indeed, face 22 includes a first slightly concave central section 221 and a peripheral generally obtuse frusto-conical section 222. Piercing location 22c1 is located on section 221 where member axis 12c1' intercepts section 221. The remaining locations 22c2',22c3' (including the location behind location 22c2' in this view) are located on second 222.

Location 22c1' is pierced by extremity 12c1 when piercing plane 13c reaches level 13c1. Thereafter, location 22c2' and the location hidden behind it in Fig. 4 are pierced by piercing extremity 12c2 and the extremity behind it when piercing plane 13c reaches level 13c2. Piercing location 22c3' is pierced by extremity 12c3 when piercing plane 13c reaches level 13c3. Hence, location 22c1' will be contacted and pierced first, then location 22c2' (and the hidden location) will be contacted and pierced, and finally piercing location 22c3' will be contacted and pierced.

Such a piercing by multiple piercing extremities 12c1,12c2,12c3 in a manner that is spaced in time can be achieved by mounting piercing device 10 in a cavity of a capsule receiver (not shown in Fig. 4 but similar to receiver 30 of Figs 3a and 3d) in an offset fashion relative to axis 35 of the cavity that receives capsule 2. As illustrated in Fig. 4, central axis 10" of piercing device 10 is offset relative to axis 25 of capsule 20 and axis 35 of the receiver cavity.

As illustrated in Fig. 4 piercing element 11c have two edges inclined to piercing direction 10' and intercepting each other to form piercing extremities 12c1,12c2,12c3.

Fig. 5, in which the same numeric references generally designate the same elements, illustrates a further example in accordance with the invention.

In this example, piercing device 10 of the extraction unit has a plurality of piercing elements 11c,11d. Each element 11c,11d has a piercing extremity 12c,12d arranged to pierce capsule 20 in a piercing direction 10', such as a direction 10' generally parallel to a longitudinal axis 12c',12d' of piercing elements 11c,11d. Piercing extremities 12c,12d are configured to form at corresponding locations 22c',22d' of capsule 20 either a series of corresponding inlet openings or a series of corresponding outlet openings. Piercing extremities 12c,12d of elements 11c,11d are typically arranged to pierce capsule 20 prior to circulating an extraction fluid into capsule 20.

Piercing extremities 12c,12d are spatially arranged relatively to piercing locations 22c',22d' to contact and penetrate capsule 20 at piercing locations 22c',22d' at different respective moments in time when capsule 20 and piercing device 10 are urged together in piercing direction 10' in the extraction unit.

Capsule 20 can have a face 22 to be pierced by all piercing extremities 12c,12d of piercing device 10. capsule face 22 may be so deformable as to deform without piercing over at least 5% of an overall size of the capsule in piercing direction 10', in particular deform without piercing over at least 10% or 15% thereof, if capsule face 22 were in contact with and urged against all piercing extremities 12c,12d of piercing device 10 to be pierced at the same moment in time. Capsule face 22 can be made of at least one of a metal such as aluminium, plastic, and biodegradable material.

Piercing extremities 12c,12d can be generally located on a single virtual piercing plane 13cd. Single piercing plane 13cd may have a total number of piercing extremities of 2, 3, 4, 5, 6, 7, 8, 9 or 10. In the example shown in Fig. 5, piercing device 10 has 8 piercing extremities 12c,12d, three of which are located behind piercing extremity 12c generally in the middle of the particular view of Fig. 5.

Piercing locations 22c',22d' on capsule 20 are located on a capsule portion 22 that is non-parallel to piercing plane 13cd, e.g. on a non-planar face 22.

Piercing elements 11c,11d may have two edges inclined to piercing direction 10' and intercepting each other to form piercing extremity 12c,12d.

Piercing extremities 12c,12d of piercing plane 13cd can be arranged generally in one or more circles or ellipses. In the embodiment illustrated in Fig. 5, two virtual circles are provided; piercing extremities 12c can be located on an outer circle and piercing extremities 12d can be located on an inner circle. The four piercing extremities 12c can be generally equally spaced apart at about 0, 90, 180 and 270 deg on the outer circle. The four piercing extremities 12d can be generally equally spaced apart at about 0, 90, 180 and 270 deg on the inner circle.

As illustrated in Fig. 5, each piercing extremity 12c,12d may have a piercing axis 12c',12d' generally parallel to piercing direction 10'. Piercing elements 11c,11d and piercing extremities 12c,12d of piercing device being in a generally multiple virtual cylindrical arrangement, such as a dual cylindrical arrangement as in the embodiment of Fig. 5, e.g. a concentric cylindrical arrangement. Piercing extremities 12c,12d of a cylindrical arrangement can be evenly spaced apart.

As shown in Fig. 5, central axis 10" of piercing device, capsule axis 25 and cavity axis 35 of the capsule receiver (not shown in Fig. 4 but similar to receiver 30 of Figs 3a and 3d) are about identical.

The piercing of capsule 20 by multiple piercing extremities 12c,12d in a manner that is spaced in time can be achieved by using a capsule 20 that has a portion 22 to be pierced that is convex and/or concave. Hence, when the piercing device 10 and portion 22 are urged together piercing extremities 12c,12d reach piercing locations 22c',22d' at different moments in time. As illustrated in Fig. 5, piercing extremities 12d of the inner circle reach first portion 22, in particular central section 221, when piercing plane 13cd reaches level 13d at locations 22d' whereas piercing extremities 12c of the outer circle reach later on capsule portion 22, e.g. peripheral section 222, when piercing plane 13cd reaches level 13c.

## Claims

1. A combination of an extraction unit (1) and a capsule (20) to be extracted by the unit, the capsule (20) comprising a generally cylindrical or frusto-conical or domical or frusto-domical container that has a bottom (22) and a cover (23), the unit having a piercing device (10) for piercing the capsule, the piercing device comprising a plurality of piercing elements (11a,11b,11c,11d) each element having a piercing extremity (12a, 12b, 12c1, 12c2, 12c3,12c,12d) arranged to pierce the capsule in a piercing direction (10'), such as a direction (10') generally parallel to a longitudinal axis (12a', 12b' ,12c1' ,12c2' , 12c3',12c',12d') of the piercing elements (11a,11b,11c, 11d), the capsule (20) having a face to be pierced by all the piercing extremities (12a, 12b, 12c1, 12c2, 12c3, 12c, 12d) of the piercing device (10), the piercing face being formed by the bottom (22) of the capsule (20), the piercing extremities (12a,12b, 12c1,12c2,12c3,12c,12d) being spatially arranged relatively to the piercing locations (22', 22c1' ,22c2' ,22c3' ,22c', 22d') to contact and penetrate the capsule (20) at the piercing locations at different respective moments in time when the capsule and the piercing device are urged together in the piercing direction (10'), **characterized in that** the piercing extremities form at corresponding locations (22',22c1',22c2',22c3',22c',22d') of the capsule (20) a series of corresponding inlet openings.

2. The combination of claim 1, wherein the capsule face (22) is so deformable as to deform without piercing over at least 5% of an overall size of the capsule in the piercing direction (10'), in particular deform without piercing over at least 10% or 15% thereof, if the capsule face (22) were in contact with and urged against all piercing extremities of the piercing device to be pierced at the same moment in time, the capsule face (22) being for instance made of at least one of a metal such as aluminium, plastic, and biodegradable material.

3. The combination of claim 1 or 2, wherein said piercing extremities (12a,12b) are generally located on different virtual piercing planes (13a,13b) perpendicular to the piercing direction (10'), optionally each piercing plane (13a,13b) having a total number of piercing extremities (12a,12b) of 1, 2, 3, 4, 5, 6, 7 or 8.

4. The combination of claim 1 or 2, wherein the piercing extremities (12c1,12c2,12c3,12c,12d) are generally located on a single virtual piercing plane (13c,13cd), optionally the single piercing plane having a total number of piercing extremities of 2, 3, 4, 5, 6, 7, 8, 9 or 10.

5. The combination of any preceding claim, wherein the piercing locations (22',22c1',22c2',22c3',22c',22d') on the capsule (20) are located on a capsule portion (22) that is non-parallel to the piercing plane(s) (13a,13b,13c,13cd), in particular a non-planar face (22).

6. The combination of any preceding claim, wherein the piercing device (10) comprises at least one of:
- a base (14) supporting the piercing elements (11a,11b, 11c,11d) ; and
- at least one blade (11a,11b,11c,11d) and/or at least one pin as a piercing element.

7. The combination of claim 6, wherein the piercing device (10) has a first type of blades (11b) that comprises at least one assembly member (15a,15b) for securing the device (10) in such unit (1), optionally the assembly member(s) extending from a bottom part (14b) of the first-type blade(s) (11b) and/or forming a cut-out (15a,15b) in the first-type blade(s) (11b) such as a foot (14b) thereof and/or being movable relative to the piercing extremity (12b) of the first-type blade(s) such as resiliently movable.

8. The combination of claim 7, wherein the piercing device (10) has a second type of blades (11a) devoid of such assembly member, optionally:
- the second-type blade(s) (11a) having a foot (14a) with a second width (14a') generally equal to a first width (14b') of a foot (14b) of the first-type blade(s) (11b), and/or
- the first and second type blades (11a,11b) are positioned in alternation about an axis, such as a central axis (10'') and/or an axis (10'') parallel to the piercing direction (10'), of the piercing device.

9. The combination of any preceding claim, wherein at least one piercing element (11a,11b,11c,11d) has:
- an edge (121a,121b) that is generally parallel to the piercing direction (10') and an inclined edge (122a, 122b) intercepting the parallel edge to form the piercing extremity (12a,12b); or
- two edges inclined to the piercing direction (10') and intercepting each other to form the piercing extremity (12c1,12c2,12c3,12c,12d).

10. The combination of any preceding claim, wherein the piercing extremities (12a,12b,12c1,12c2,12c3,12c,12d) of a piercing plane (13a,13b,13c,13cd) are arranged generally in one or more circles or ellipses and optionally evenly spaced apart.

11. The combination of any preceding claim, wherein each piercing extremity (12a, 12b, 12c1, 12c2, 12c3, 12c, 12d) has a piercing axis (12a',12b',12c1',12c2',12c3',12c',12d') generally parallel to the piercing direction (10'), the piercing elements (11a,11b,11c) and the piercing extremities (12a, 12b, 12c1, 12c2, 12c3) of the piercing device (10) being in a generally single cylindrical arrangement about a generally central axis (10'') of the piercing device or the piercing elements (11c,11d) and the piercing extremities 12c,12d) of the piercing device being in a generally multiple cylindrical arrangement such as a dual cylindrical arrangement, in particular a concentric cylindrical arrangement, the piercing extremities (12a, 12b, 12c1, 12c2, 12c3, 12c, 12d) of a cylindrical arrangement being optionally evenly spaced apart.

12. The combination of any preceding claim, which comprises a first capsule receiver (30):
- which is integral with the piercing device; or
- in or on which the piercing device (10) is mounted, optionally the first capsule receiver (30) being connected to a fluid line (33) for circulating a fluid into a capsule (20) pierced by the piercing device (10).

13. The combination of claim 12, which comprises a second capsule receiver (40) that is movable relatively to the first capsule receiver (30), between an open position for inserting or removing a capsule (20) from such extraction unit (1) and a closed position for extracting said capsule in such unit, optionally the second capsule receiver (30) being arranged to hold said capsule (20) against the piercing extremities (12a,12b, 12c1, 12c2, 12c3,12c,12d) when the first and second receivers (30,40) are relatively moved into the closed position generally parallel to the piercing direction (10').

14. A method of piercing, in a combination as defined in any preceding claim, the capsule (20), which method comprises urging the capsule relatively against the piercing device (10) along the piercing direction (10') so that two different piercing extremities (12a,12b,12c1, 12c2,12c3,12c,12d) of the device (10) contact and penetrate the capsule at different respective moments in time, optionally the piercing extremities (12a, 12b, 12c1, 12c2, 12c3, 12c, 12d) of the elements (11a,11b,11c,11d) piercing the capsule (20) prior to circulating an extraction fluid into the capsule.

15. Use of a capsule (20) for:
- providing a combination as defined in any one of claims 1 to 13; or
- being pierced by a method as defined in claim 14.

## Patentansprüche

1. Kombination aus einer Extraktionseinheit (1) und einer Kapsel (20), die durch die Einheit extrahiert werden soll, die Kapsel (20) umfassend einen allgemein zylindrischen oder kegelstumpfförmigen oder kuppelförmigen oder kuppelstumpfförmigen Behälter, der einen Boden (22) und eine Abdeckung (23) aufweist, wobei die Einheit eine Stichvorrichtung (10) zum Durchstechen der Kapsel aufweist, die Stichvorrichtung umfassend eine Vielzahl von Stichgliedern (11a, 11b, 11c, 11d), wobei jedes Glied ein Stichende (12a, 12b, 12c1, 12c2, 12c3, 12c, 12d) aufweist, das angeordnet ist, um die Kapsel in einer Stichrichtung (10') zu durchstechen, wie etwa einer Richtung (10'), die allgemein parallel zu einer Längsachse (12a', 12b', 12c1', 12c2', 12c3', 12c', 12d') der Stichelemente (11a, 11b, 11c, 11d) ist, wobei die Kapsel (20) eine Fläche aufweist, die von allen Stichenden (12a, 12b, 12c1, 12c2, 12c3, 12c, 12d) der Stichvorrichtung (10) durchstochen wird, wobei die Stichfläche durch den Boden (22) der Kapsel (20) gebildet wird, die Stichenden (12a, 12b, 12c1, 12c2, 12c3, 12c, 12d) räumlich relativ zu den Stichstellen (22', 22c1', 12c2', 12c3', 12c', 22d') angeordnet sind, um die Kapsel (20) an den Stichstellen zu verschiedenen jeweiligen Zeitpunkten zu kontaktieren und zu durchdringen, wenn die Kapsel und die Stichvorrichtung zusammen in die Stichrichtung (10') gedrängt werden, **dadurch gekennzeichnet, dass** die Stichenden an den entsprechenden Stellen (22', 22c1', 22c2', 22c3', 22c', 22d') der Kapsel (20) eine Reihe von entsprechenden Einlassöffnungen bilden.

2. Kombination nach Anspruch 1, wobei die Kapselfläche (22) so verformbar ist, dass sie sich verformt ohne über mindestens 5 % einer Gesamtabmessung der Kapsel in der Stichrichtung (10') zu durchstechen, insbesondere sich zu verformen ohne über mindestens 10 % oder 15 % davon zu durchstechen, falls die Kapselfläche (22) mit allen Stichenden der Stichvorrichtung in Kontakt wäre und gegen diese gedrückt würde, die zu demselben Zeitpunkt zu durchstechen sind, wobei die Kapselfläche (22) beispielsweise aus mindestens einem von einem Metall, wie Aluminium, Kunststoff und einem biologisch abbaubaren Material, hergestellt ist.

3. Kombination nach Anspruch 1 oder 2, wobei die Stichenden (12a, 12b) allgemein auf verschiedenen virtuellen Stichebenen (13a, 13b) senkrecht zu der Stichrichtung (10') angeordnet sind, wobei wahlweise jede Stichebene (13a, 13b) eine Gesamtzahl von Stichenden (12a, 12b) von 1, 2, 3, 4, 5, 6, 7 oder 8 aufweist.

4. Kombination nach Anspruch 1 oder 2, wobei die Stichenden (12c1, 12c2, 12c3, 12c, 12d) allgemein auf einer einzelnen virtuellen Stichebene (13c, 13cd) angeordnet sind, wobei die einzelne Stichebene wahlweise eine Gesamtzahl von Stichenden von 2, 3, 4, 5, 6, 7, 8, 9 oder 10 aufweist.

5. Kombination nach einem der vorstehenden Ansprüche, wobei sich die Stichstellen (22', 22c1', 22c2', 22c3', 22c', 22d') auf der Kapsel (20) auf einem Kapselabschnitt (22) befinden, der nicht parallel zu der/den Stichebene(n) (13a, 13b, 13c, 13cd), insbesondere einer nicht ebenen Fläche (22), ist.

6. Kombination nach einem der vorstehenden Ansprüche, wobei die Stichvorrichtung (10) mindestens eines von Folgenden umfasst:
- einer Basis (14), die die Stichelemente (11a, 11b, 11c, 11d) trägt; und
- mindestens einer Klinge (11a, 11b, 11c, 11d) und/oder mindestens einer Nadel als ein Stichelement.

7. Kombination nach Anspruch 6, wobei die Stichvorrichtung (10) eine erste Art von Klingen (11b) aufweist, die mindestens ein Montageglied (15a, 15b) zum Befestigen der Vorrichtung (10) in einer solchen Einheit (1) umfasst, wahlweise wobei sich das/die Montageglied(er) von einem Bodenteil (14b) der Klinge(n) (11b) der ersten Art erstreckt/erstrecken und/oder eine Aussparung (15a, 15b) in der/den Klinge(n) (11b) der ersten Art, wie einen Fuß (14b) davon, bildet/bilden und/oder in Bezug auf das Stichende (12b) der Klinge(n) der ersten Art beweglich, wie elastisch beweglich, ist/sind.

8. Kombination nach Anspruch 7, wobei die Stichvorrichtung (10) eine zweite Art von Klingen (11a) aufweist, die frei von einem solchen Montageglied sind, wobei wahlweise:
- die Klinge(n) (11a) der zweiten Art einen Fuß (14a) mit einer zweiten Breite (14a'), die allgemein gleich einer ersten Breite (14b') von einem Fuß (14b) der Klinge(n) (11b) der ersten Art ist, aufweist/aufweisen und/oder
- die Klingen (11a, 11b) der ersten und zweiten Art abwechselnd um eine Achse, wie eine zentrale Achse (10") und/oder eine Achse (10"), die parallel zu der Stichrichtung (10') liegt, der Stichvorrichtung positioniert sind.

9. Kombination nach einem der vorstehenden Ansprüche, wobei mindestens ein Stichelement (11a, 11b, 11c, 11d) Folgendes aufweist:
- eine Kante (121a, 121b), die allgemein parallel zu der Stichrichtung (10') verläuft, und eine geneigte Kante (122a, 122b), die die parallele Kante schneidet, um das Stichende (12a, 12b) zu bilden; oder
- zwei Kanten, die zur Stichrichtung (10') geneigt sind und einander schneiden, um das Stichende (12c1, 12c2, 12c3, 12c, 12d) zu bilden.

10. Kombination nach einem der vorstehenden Ansprüche, wobei die Stichenden (12a, 12b, 12c1, 12c2, 12c3, 12c, 12d) einer Stichebene (13a, 13b, 13c, 13cd) allgemein in einem oder mehreren Kreisen oder Ellipsen und wahlweise gleichmäßig beabstandet angeordnet sind.

11. Kombination nach einem der vorstehenden Ansprüche, wobei jedes Stichende (12a, 12b, 12c1, 12c2, 12c3, 12c, 12d) eine Stichachse (12a', 12b', 12c1', 12c2', 12c3', 12c', 12d') allgemein parallel zu der Stichrichtung (10') aufweist, wobei die Stichelemente (11a, 11b, 11c) und die Stichenden (12a, 12b, 12c1, 12c2, 12c3) der Stichvorrichtung (10) in einer allgemein einzelnen zylindrischen Anordnung um eine allgemein zentrale Achse (10") der Stichvorrichtung oder die Stichenden 12c, 12d) in einer allgemein mehreren zylindrischen Anordnung, wie einer doppelten zylindrischen Anordnung, insbesondere einer konzentrischen zylindrischen Anordnung, liegen, wobei die Stichenden (12a, 12b, 12c1, 12c2, 12c3, 12c, 12d) einer zylindrischen Anordnung wahlweise gleichmäßig beabstandet sind.

12. Kombination nach einem der vorstehenden Ansprüche, die eine erste Kapselaufnahme (30) umfasst:
- die integral mit der Stichvorrichtung ist; oder
- in oder auf der die Stichvorrichtung (10) angebracht ist, wobei wahlweise die erste Kapselaufnahme (30) mit einer Fluidleitung (33) zum Zirkulieren eines Fluids in eine Kapsel (20), die von der Stichvorrichtung (10) durchstochen wird, verbunden ist.

13. Kombination nach Anspruch 12, die eine zweite Kapselaufnahme (40), die in Bezug auf die erste Kapselaufnahme (30) zwischen einer geöffneten Stellung zum Einsetzen oder Entfernen einer Kapsel (20) aus einer solchen Extraktionseinheit (1) und einer geschlossenen Stellung zum Extrahieren der Kapsel einer solchen Einheit beweglich ist, umfasst, wobei die zweite Kapselaufnahme (30) wahlweise dazu angeordnet ist, die Kapsel (20) gegen die Stichenden (12a, 12b, 12c1, 12c2, 12c3, 12c, 12d) zu halten, wenn die erste und die zweite Aufnahme (30, 40) relativ in die geschlossene Stellung, die im Allgemeinen parallel zu der Stichrichtung (10') liegt, bewegt werden.

14. Verfahren zum Durchstechen, in einer Kombination, wie in einem der vorstehenden Ansprüche definiert, der Kapsel (20), wobei das Verfahren das Drängen der Kapsel relativ gegen die Stichvorrichtung (10) entlang der Stichrichtung (10') umfasst, sodass zwei unterschiedliche Stichenden (12a, 12b, 12c1, 12c2, 12c3, 12c, 12d) der Vorrichtung (10) die Kapsel zu unterschiedlichen jeweiligen Zeitpunkten berühren und durchdringen, wobei wahlweise die Stichenden (12a, 12b, 12c1, 12c2, 12c3, 12c, 12d) der Elemente (11a, 11b, 11c, 11d), die Kapsel (20) durchstechen, bevor ein Extraktionsfluid in die Kapsel zirkuliert wird.

15. Verwendung einer Kapsel (20) zum:
- Bereitstellen einer Kombination nach einem der Ansprüche 1 bis 13; oder
- Durchstochen werden durch ein Verfahren nach Anspruch 14.

## Revendications

1. Combinaison d'une unité d'extraction (1) et d'une capsule (20) devant être extraite par l'unité, la capsule (20) comprenant un récipient généralement cylindrique ou en forme de cône tronqué ou en forme de dôme ou en forme de dôme tronqué qui a un fond (22) et un couvercle (23), l'unité ayant un dispositif de perçage (10) pour percer la capsule, le dispositif de perçage comprenant une pluralité d'éléments de perçage (11a, 11b, 11c, 11d) chaque élément ayant une extrémité de perçage (12a, 12b, 12c1, 12c2, 12c3, 12c, 12d) agencée pour percer la capsule dans une direction de perçage (10'), telle qu'une direction (10') généralement parallèle à un axe longitudinal (12a', 12b', 12c1', 12c2', 12c3', 12c', 12d') des éléments de perçage (11a, 11b, 11c, 11d), la capsule (20) ayant une face destinée à être percée par toutes les extrémités de perçage (12a, 12b, 12c1, 12c2, 12c3, 12c, 12d) du dispositif de perçage (10), la face de perçage étant formée par le fond (22) de la capsule (20), les extrémités de perçage (12a, 12b, 12c1, 12c2, 12c3, 12c, 12d) étant agencées spatialement par rapport aux emplacements de perçage (22', 22c1', 22c2', 22c3', 22c', 22d') pour entrer en contact avec et pénétrer dans la capsule (20) au niveau des emplacements de perçage à différents moments respectifs dans le temps lorsque la capsule et le dispositif de perçage sont poussés ensemble dans la direction de perçage (10'), **caractérisée en ce que** les extrémités de perçage forment au niveau d'emplacements correspondants (22', 22c1', 22c2', 22c3', 22c', 22d') de la capsule (20) une série d'ouvertures d'entrée correspondantes.

2. Combinaison selon la revendication 1, dans laquelle la face de capsule (22) est ainsi déformable qu'elle se déforme sans perçage sur au moins 5 % d'une taille globale de la capsule dans la direction de perçage (10'), en particulier se déforme sans perçage sur au moins 10 % ou 15 % de celle-ci, si la face de la capsule (22) était en contact avec et poussée contre toutes les extrémités de perçage du dispositif de perçage pour être percée au même moment, la face de la capsule (22) étant par exemple constituée d'au moins l'un parmi un métal tel que l'aluminium, du plastique, et un matériau biodégradable.

3. Combinaison selon la revendication 1 ou 2, dans laquelle lesdites extrémités de perçage (12a, 12b) sont généralement situées sur différents plans de perçage virtuels (13a, 13b) perpendiculaires à la direction de perçage (10'), éventuellement chaque plan de perçage (13a, 13b) ayant un nombre total d'extrémités de perçage (12a, 12b) de 1, 2, 3, 4, 5, 6, 7 ou 8.

4. Combinaison selon la revendication 1 ou 2, dans laquelle les extrémités de perçage (12c1, 12c2, 12c3, 12c, 12d) sont généralement situées sur un plan de perçage virtuel unique (13c, 13cd), éventuellement le plan de perçage unique ayant un nombre total d'extrémités de perçage de 2, 3, 4, 5, 6, 7, 8, 9 ou 10.

5. Combinaison selon l'une quelconque revendication précédente, dans laquelle les emplacements de perçage (22', 22c1', 22c2', 22c3', 22c', 22d') sur la capsule (20) sont situés sur une partie de capsule (22) qui n'est pas parallèle au(x) plan(s) de perçage (13a, 13b, 13c, 13cd), notamment une face non planaire (22).

6. Combinaison selon l'une quelconque revendication précédente, dans laquelle le dispositif de perçage (10) comprend au moins l'un parmi :
- une base (14) supportant les éléments de perçage (11a, 11b, 11c, 11d) ; et
- au moins une lame (11a, 11b, 11c, 11d) et/ou au moins une pointe comme élément de perçage.

7. Combinaison selon la revendication 6, dans laquelle le dispositif de perçage (10) a un premier type de lames (11b) qui comprend au moins un élément d'assemblage (15a, 15b) pour fixer le dispositif (10) dans une telle unité (1), éventuellement le ou les éléments d'assemblage s'étendant depuis une partie inférieure (14b) de la ou des lames du premier type (11b) et/ou formant une découpe (15a, 15b) dans la ou les lames du premier type (11b) telle qu'un pied (14b) de celles-ci et/ou étant mobiles par rapport à l'extrémité de perçage (12b) de la ou des lames du premier type tel que mobiles élastiquement.

8. Combinaison selon la revendication 7, dans laquelle le dispositif de perçage (10) a un second type de lames (11a) dépourvu d'un tel élément d'assemblage, éventuellement :
- la ou les lames (11a) du second type ayant un pied (14a) avec une seconde largeur (14a') généralement égale à une première largeur (14b') d'un pied (14b) de la ou des lames du premier type (11b), et/ou
- les lames des premier et second types (11a, 11b) sont disposées en alternance autour d'un axe, tel qu'un axe central (10"), et/ou un axe (10") parallèle à la direction de perçage (10') du dispositif de perçage.

9. Combinaison selon l'une quelconque revendication précédente, dans laquelle au moins un élément de perçage (11a, 11b, 11c, 11d) a :
- un bord (121a, 121b) qui est généralement parallèle à la direction de perçage (10') et un bord incliné (122a, 122b) interceptant le bord parallèle pour former l'extrémité de perçage (12a, 12b) ; ou
- deux bords inclinés vers la direction de perçage (10') et s'interceptant l'un l'autre pour former l'extrémité de perçage (12c1, 12c2, 12c3, 12c, 12d).

10. Combinaison selon l'une quelconque revendication précédente, dans laquelle les extrémités de perçage (12a, 12b, 12c1, 12c2, 12c3, 12c, 12d) d'un plan de perçage (13a, 13b, 13c, 13cd) sont agencées généralement en un ou plusieurs cercles ou ellipses et éventuellement régulièrement espacées.

11. Combinaison selon l'une quelconque revendication précédente, dans laquelle chaque extrémité de perçage (12a, 12b, 12c1, 12c2, 12c3, 12c, 12d) a un axe de perçage (12a', 12b', 12c1', 12c2', 12c3', 12c', 12d ') généralement parallèle à la direction de perçage (10'), les éléments de perçage (11a, 11b, 11c) et les extrémités de perçage (12a, 12b, 12c1, 12c2, 12c3) du dispositif de perçage (10) étant dans un agencement cylindrique généralement unique autour d'un axe généralement central (10") du dispositif de perçage ou des éléments de perçage (11c, 11d) et les extrémités de perçage (12c, 12d) du dispositif de perçage étant dans un agencement cylindrique généralement multiple tel qu'un agencement cylindrique double, notamment un agencement cylindrique concentrique, les extrémités de perçage (12a, 12b, 12c1, 12c2, 12c3, 12c, 12d) d'un agencement cylindrique étant éventuellement régulièrement espacées.

12. Combinaison selon l'une quelconque revendication précédente, qui comprend un premier récepteur de capsule (30) :
- qui est solidaire du dispositif de perçage ; ou
- dans ou sur lequel le dispositif de perçage (10) est monté, éventuellement le premier récepteur de capsule (30) étant relié à une conduite de fluide (33) pour faire circuler un fluide dans une capsule (20) percée par le dispositif de perçage (10).

13. Combinaison selon la revendication 12, qui comprend un second récepteur de capsule (40) qui est mobile par rapport au premier récepteur de capsule (30), entre une position ouverte pour insérer ou retirer une capsule (20) d'une telle unité d'extraction (1) et une position fermée pour extraire ladite capsule dans une telle unité, éventuellement le second récepteur de capsule (30) étant agencé pour maintenir ladite capsule (20) contre les extrémités de perçage (12a, 12b, 12c1, 12c2, 12c3, 12c, 12d) lorsque les premier et second récepteurs (30, 40) sont déplacés relativement dans la position fermée généralement parallèlement à la direction de perçage (10').

14. Procédé de perçage, dans une combinaison telle que définie dans l'une quelconque revendication précédente, de la capsule (20), lequel procédé comprend le fait de pousser la capsule relativement contre le dispositif de perçage (10) le long de la direction de perçage (10') de sorte que deux extrémités de perçage différentes (12a, 12b, 12c1, 12c2, 12c3, 12c, 12d) du dispositif (10) entrent en contact avec et pénètrent dans la capsule à différents moments respectifs dans le temps, éventuellement les extrémités de perçage (12a, 12b, 12c1, 12c2, 12c3, 12c, 12d) des éléments (11a, 11b, 11c, 11d) perçant la capsule (20) avant de faire circuler un fluide d'extraction dans la capsule.

15. Utilisation d'une capsule (20) pour :
- fournir une combinaison telle que définie dans l'une quelconque des revendications 1 à 13 ; ou
- être percée par un procédé tel que défini dans la revendication 14.
